# EUROPÄISCHE PATENTANMELDUNG

(11) **EP 3 715 541 A2**
(43) Veröffentlichungstag der Anmeldung: **30.09.2020**
(21) Anmeldenummer: 20161192.8
(22) Anmeldetag: 05.03.2020
(51) Int. Cl.: E03C 1/05, G01L 9/00

(54) **SANITÄREINRICHTUNG MIT ZUMINDEST EINEM MINDESTENS EINEN DEHNUNGSSENSOR AUFWEISENDEN FLÜSSIGKEITSSCHLAUCH**

(30) Priorität: 28.03.2019 DE 102019002223
(71) Anmelder: Grohe AG, 58675 Hemer (DE)
(72) Erfinder: BISCHOFF, Bernd, 58097 Hagen (DE)

(57) **Zusammenfassung**

Sanitäreinrichtung (1), zumindest aufweisend:
- einen Flüssigkeitsverbraucher (2),
- zumindest einen Flüssigkeitsanschluss (3, 4) zur Bereitstellung einer Flüssigkeit und
- zumindest einen Flüssigkeitsschlauch (5, 6), der den Flüssigkeitsverbraucher (2) mit dem zumindest einen Flüssigkeitsanschluss (3, 4) verbindet, wobei der zumindest eine Flüssigkeitsschlauch (5, 6) zumindest einen Dehnungssensor (7) zur Bestimmung eines Flüssigkeitsdrucks in dem zumindest einen Flüssigkeitsschlauch (5, 6) umfasst.

## Beschreibung

Die vorliegende Erfindung betrifft eine Sanitäreinrichtung mit einem Flüssigkeitsverbraucher, der beispielsweise nach Art einer Sanitärarmatur ausgebildet sein kann. Sanitärarmaturen dienen insbesondere der bedarfsgerechten Bereitstellung eines Mischwassers an einem Waschbecken, Spülbecken, Dusche und/oder Badewanne.

Eine ordnungsgemäße Funktion von Flüssigkeitsverbrauchern hängt häufig davon ab, dass den Flüssigkeitsverbrauchern Flüssigkeit mit einem geeigneten Flüssigkeitsdruck zugeführt wird. Zur Überwachung des Flüssigkeitsdrucks können in den Flüssigkeitsverbrauchern Drucksensoren angeordnet sein, mithilfe derer der Flüssigkeitsdruck der zugeführten Flüssigkeit bestimmbar ist. Die Integration derartiger Drucksensoren in Flüssigkeitsverbrauchern ist jedoch teilweise nicht möglich und/oder führt zu hohem Montageaufwand und somit zu hohen Kosten.

Aufgabe der Erfindung ist es daher, die mit Bezug auf den Stand der Technik geschilderten Probleme zumindest teilweise zu lösen und insbesondere eine Sanitäreinrichtung anzugeben, bei der ein Flüssigkeitsdruck einer zugeführten Flüssigkeit mit geringem Aufwand überwachbar ist.

Diese Aufgabe wird gelöst mit einer Sanitäreinrichtung gemäß den Merkmalen des unabhängigen Patentanspruchs. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Sanitäreinrichtung bei, die zumindest die folgenden Komponenten aufweist:
- einen Flüssigkeitsverbraucher,
- zumindest einen Flüssigkeitsanschluss zur Bereitstellung einer Flüssigkeit und zumindest einen Flüssigkeitsschlauch, der den Flüssigkeitsverbraucher mit dem zumindest einen Flüssigkeitsanschluss verbindet, wobei der zumindest eine Flüssigkeitsschlauch zumindest einen Dehnungssensor zur Bestimmung eines Flüssigkeitsdrucks in dem zumindest einen Flüssigkeitsschlauch umfasst.

Bei der Sanitäreinrichtung handelt es sich insbesondere um eine Vorrichtung, die der Hygiene des Menschen oder von Gegenständen dienen kann. Derartige Sanitäreinrichtungen werden daher vorzugsweise in Küchen, Bädern, Dusch- und/oder Toilettenanlagen verwendet. Die Sanitäreinrichtung umfasst einen Flüssigkeitsverbraucher, bei dem es sich beispielsweise um eine Sanitärarmatur, Spülmaschine, Toilettenspülung oder Waschmaschine handeln kann. Vorzugsweise handelt es sich bei dem Flüssigkeitsverbraucher um eine Sanitärarmatur, die der Bereitstellung von Wasser an einem Spülbecken, Waschbecken, Dusche und/oder Badewanne dient. Die Sanitärarmatur kann ein Gehäuse aufweisen, das bevorzugt zumindest teilweise aus (Guss-) Metall, wie zum Beispiel Messing, und/oder Kunststoff besteht. Das Gehäuse kann einen Auslauf aufweisen, der starr oder bewegbar, insbesondere verschwenkbar und/oder zumindest teilweise ausziehbar, an dem Gehäuse befestigt ist. Weiterhin kann die Sanitärarmatur ein Mischventil oder eine (Thermostat-)Mischkartusche aufweisen, durch die ein Kaltwasser mit einer Kaltwassertemperatur und ein Warmwasser mit einer Warmwassertemperatur zu einem Mischwasser mit einer gewünschten Mischwassertemperatur mischbar sind. Die Kaltwassertemperatur beträgt insbesondere maximal 25 °C (Celsius), bevorzugt 1 °C bis 25 °C, besonders bevorzugt 5 °C bis 20 °C und/oder die Warmwassertemperatur insbesondere maximal 90 °C, bevorzugt 25 °C bis 90 °C, besonders bevorzugt 55 °C bis 65 °C. Zur Einstellung der gewünschten Mischwassertemperatur kann das Mischventil oder die (Thermostat-)Mischkartusche manuell und/oder motorisch betätigbar sein. Zur manuellen Einstellung der gewünschten Mischwassertemperatur kann die Sanitärarmatur beispielsweise einen Hebel aufweisen, über den das Mischventil oder die (Thermostat-)Mischkartusche durch einen Benutzer der Sanitärarmatur betätigbar ist. Zur motorischen Einstellung der gewünschten Mischwassertemperatur kann die Sanitärarmatur beispielsweise einen (elektrischen) Antrieb aufweisen. Der Antrieb kann beispielsweise mittels einer Steuerung betätigbar sein, wobei die Steuerung zumindest einen Mikroprozessor umfassen kann. Zudem können das Mischventil oder die (Thermostat-) Mischkartusche zum Absperren der Sanitärarmatur dienen. Alternativ kann die Sanitärarmatur ein separates Ventil aufweisen, das insbesondere in einem Flüssigkeitskanal der Sanitärarmatur angeordnet ist. Das Ventil kann ebenfalls manuell und/oder motorisch, beispielsweise mit Hilfe der Steuerung, betätigbar sein.

Der Flüssigkeitsverbraucher ist über zumindest einen Flüssigkeitsschlauch mit zumindest einem Flüssigkeitsanschluss zur Bereitstellung einer Flüssigkeit verbunden. Der zumindest eine Flüssigkeitsanschluss ist insbesondere in einem Raum angeordnet, in dem die Sanitäreinrichtung angeordnet bzw. installiert ist. Der zumindest eine Flüssigkeitsanschluss kann ein Ventil umfassen und/oder nach Art eines Wandventils oder Eckventils ausgebildet sein. Dem zumindest einen Flüssigkeitsanschluss ist die Flüssigkeit, beispielsweise über Rohrleitungen, insbesondere von einer Flüssigkeitsquelle zuführbar. Bei der Flüssigkeitsquelle kann es sich beispielsweise um ein öffentliches Wasserversorgungsnetz und/oder einen Warmwasserbereiter, beispielsweise nach Art eines Boilers, handeln. Bei der Flüssigkeit kann es sich insbesondere um Kaltwasser und/oder Warmwasser handeln. Der zumindest eine Flüssigkeitsschlauch ist insbesondere lösbar mit dem zumindest einen Flüssigkeitsanschluss verbindbar. Hierzu kann der zumindest eine Flüssigkeitsanschluss beispielsweise ein Gewinde oder einen Bajonett-Verschluss aufweisen. Weiterhin kann der zumindest eine Flüssigkeitsschlauch, beispielsweise an zumindest einem seiner längsseitigen Enden, ein Anschlusselement, beispielsweise nach Art einer Mutter, einer Überwurfmutter oder eines Bajonettanschlusses, aufweisen, mittels dem der zumindest eine Flüssigkeitsschlauch an dem zumindest einen Flüssigkeitsanschluss befestigbar ist. Der zumindest eine Flüssigkeitsschlauch ist insbesondere flexibel und/oder besteht zumindest teilweise aus Kunststoff. Weiterhin kann der zumindest eine Flüssigkeitsschlauch zumindest teilweise eine Ummantelung oder Umflechtung (sogenanntes "Braiding") aus Kunststoff oder Metall aufweisen. Zudem kann der zumindest eine Flüssigkeitsschlauch eine Länge von beispielsweise 10 mm (Millimeter) bis 2.000 mm und/oder einen Durchmesser von 5 mm bis 30 mm aufweisen. Der Flüssigkeitsverbraucher ist insbesondere über einen ersten Flüssigkeitsschlauch mit einem ersten Flüssigkeitsanschluss für Kaltwasser und über einen zweiten Flüssigkeitsschlauch mit einem zweiten Flüssigkeitsanschluss für Warmwasser verbunden.

Der zumindest eine Flüssigkeitsschlauch umfasst zumindest einen Dehnungssensor zur Bestimmung eines Flüssigkeitsdrucks in dem zumindest einen Flüssigkeitsschlauch. Mittels des zumindest einen Dehnungssensors ist eine Längenausdehnung und/oder Durchmesseränderung des zumindest einen Flüssigkeitsschlauchs detektierbar, sodass der Flüssigkeitsdruck der Flüssigkeit in dem zumindest einen Flüssigkeitsschlauch durch den zumindest einen Dehnungssensor indirekt bestimmbar ist. Der zumindest eine Dehnungssensor ist insbesondere nach Art eines Dehnungsmessstreifens oder Folien-Dehnungsmessstreifens ausgebildet. Der zumindest eine Dehnungssensor kann eine Messgitterfolie aus Widerstandsdraht mit einer Dicke von beispielsweise 3 bis 8 µm (Mikrometer) aufweisen, die auf einer ersten (dünnen) Kunststofffolie als Träger kaschiert und/oder ausgeätzt ist. Weiterhin kann die Messgitterfolie mit elektrischen Anschlüssen versehen sein. Zudem kann der zumindest eine Dehnungssensor auf seiner Oberseite eine zweite (dünne) Kunststofffolie aufweisen, die mit der ersten Kunststofffolie verklebt ist und die Messgitterfolie schützt. Der zumindest eine Dehnungssensor bzw. die Messgitterfolie des zumindest einen Dehnungssensors kann insbesondere parallel oder quer zu einer Längsachse des zumindest einen Flüssigkeitsschlauchs an dem zumindest einen Flüssigkeitsschlauch angeordnet sein. Ist der zumindest eine Dehnungssensor parallel zu der Längsachse des zumindest einen Flüssigkeitsschlauchs an dem zumindest einen Flüssigkeitsschlauch angeordnet, ist insbesondere eine Längenänderung des zumindest einen Flüssigkeitsschlauchs detektierbar. Ist der zumindest eine Dehnungssensor quer zu der Längsachse des zumindest einen Flüssigkeitsschlauchs an dem zumindest einen Flüssigkeitsschlauch angeordnet, ist insbesondere eine Durchmesseränderung des zumindest einen Flüssigkeitsschlauchs detektierbar. Der zumindest eine Dehnungssensor kann zudem über zumindest eine Anschlussleitung und/oder über eine Funkverbindung datenleitend mit der Steuerung verbunden sein. Hierdurch kann die Steuerung mithilfe des zumindest einen Dehnungssensors den Flüssigkeitsdruck in dem zumindest einen Flüssigkeitsschlauch mit geringem Aufwand bestimmen bzw. berechnen.

Die Steuerung kann den Flüssigkeitsverbraucher in Abhängigkeit von dem Flüssigkeitsdruck steuern. Insbesondere kann mittels der Steuerung eine Funktion und/oder eine Komponente des Flüssigkeitsverbrauchers steuerbar sein. Hierzu kann die Steuerung beispielsweise mittels eines Steuerkabels und/oder einer Funkverbindung mit dem Flüssigkeitsverbraucher verbunden sein. Weiterhin kann die Steuerung in dem Flüssigkeitsverbraucher integriert sein.

Die Steuerung kann eine Sicherungseinrichtung gegen Leckagen in Abhängigkeit von dem Flüssigkeitsdruck steuern. Eine Leckage ist durch die Steuerung beispielsweise bei einem plötzlichen Druckabfall des Flüssigkeitsdrucks der Flüssigkeit in dem zumindest einem Flüssigkeitsschlauch detektierbar. Die Leckage kann beispielsweise an dem zumindest einen Flüssigkeitsschlauch und/oder an dem Flüssigkeitsverbraucher auftreten. Beim Detektieren einer Leckage kann die Steuerung die Sicherungseinrichtung beispielsweise aktivieren. Die Sicherungseinrichtung kann beispielsweise stromaufwärts des zumindest einen Flüssigkeitsschlauchs angeordnet sein und ein Ventil zum Absperren der Flüssigkeit aufweisen. Bei der Sicherungseinrichtung kann es sich beispielsweise auch um das Ventil des zumindest einen Flüssigkeitsanschlusses handeln, das beim Auftreten einer Leckage durch die Steuerung schließbar ist. Weiterhin kann es sich bei der Sicherungseinrichtung auch um eine Einrichtung zur Warnung des Benutzers der Sanitäreinrichtung vor einer Leckage handeln. Mittels der Sicherungseinrichtung kann hierzu beispielsweise eine akustische Warnung des Benutzers erfolgen und/oder eine Nachricht an ein Mobiltelefon des Benutzers sendbar sein.

Der zumindest eine Flüssigkeitsschlauch kann eine Mehrzahl von Dehnungssensoren aufweisen, die eine Dehnungssensor-Rosette bilden. Bei einer Dehnungssensor-Rosette handelt es sich insbesondere um eine Mehrzahl von Dehnungsmessstreifen auf einem Träger, wobei die Dehnungsmessstreifen bzw. deren Messgitterfolie zueinander verdreht angeordnet sind. Insbesondere kann eine Dehnungssensor-Rosette drei Messgitterfolien aufweisen, die zueinander um jeweils 120° verdreht angeordnet sind. Alternativ kann eine zweite Messgitterfolie um 45° zu einer ersten Messgitterfolie und eine dritte Messgitterfolie um 90° zu der zweiten Messgitterfolie verdreht angeordnet sein. Mit der Dehnungssensor-Rosette ist dadurch sowohl eine Längenänderung als auch eine Durchmesseränderung des zumindest einen Flüssigkeitsschlauchs bestimmbar.

Der zumindest eine Dehnungssensor kann auf einer Oberfläche des zumindest einen Flüssigkeitsschlauchs angeordnet sein. Hierzu kann der zumindest eine Dehnungssensor beispielsweise auf die Oberfläche des zumindest einen Flüssigkeitsschlauchs aufgeklebt sein. Die Anordnung des zumindest einen Dehnungssensors an dem zumindest einen Flüssigkeitsschlauch kann hierdurch erst nach der Konfektionierung des zumindest einen Flüssigkeitsschlauchs erfolgen. Somit ist eine Position des zumindest einen Dehnungssensor an dem zumindest einen Flüssigkeitsschlauch frei wählbar. Zudem kann der zumindest eine Dehnungssensor beispielsweise bei einer Beschädigung leicht ausgetauscht werden. Zudem liegen die Anschlüsse des zumindest einen Dehnungssensor frei, sodass diese leicht zugänglich sind.

Der zumindest eine Dehnungssensor kann in einer Schlauchwand des zumindest einen Flüssigkeitsschlauchs angeordnet sein. Insbesondere kann der zumindest eine Dehnungssensor unter der Ummantelung oder der Umflechtung des zumindest einen Flüssigkeitsschlauchs angeordnet sein. Hierdurch ist der zumindest eine Dehnungssensor besonders gut gegen Beschädigungen geschützt. Zudem ist verhinderbar, dass die Ummantelung oder die Umflechtung die Genauigkeit der Bestimmung des Flüssigkeitsdrucks negativ beeinflussen. Die Anschlüsse des zumindest einen Dehnungssensors können aus der Schlauchwand an die Oberfläche des zumindest einen Flüssigkeitsschlauchs herausgeführt werden.

Der zumindest eine Dehnungssensoren kann an einem Anschlusselement des zumindest einen Flüssigkeitsschlauchs angeordnet sein. Das zumindest eine Anschlusselement dient insbesondere der Befestigung des zumindest einen Flüssigkeitsschlauchs an dem zumindest einen Flüssigkeitsanschluss und/oder an dem Flüssigkeitsverbraucher. Das zumindest eine Anschlusselement kann beispielsweise eine Mutter bzw. Überwurfmutter zur Befestigung des zumindest einen Flüssigkeitsschlauchs an dem zumindest einen Flüssigkeitsanschluss oder einen Nippel zum Einstecken des zumindest einen Flüssigkeitsschlauchs in den Flüssigkeitsverbraucher umfassen. Das Anschlusselement ist insbesondere an zumindest einem längsseitigen Ende des zumindest einen Flüssigkeitsschlauchs angeordnet.

Der zumindest eine Flüssigkeitsschlauch kann einen Temperatursensor zur Bestimmung der Flüssigkeitstemperatur in dem zumindest einem Flüssigkeitsschlauch umfassen. Der Temperatursensor kann ebenfalls an einem Anschlusselement des zumindest einen Flüssigkeitsschlauchs oder an einem flexiblen Abschnitt des zumindest einen Flüssigkeitsschlauchs angeordnet sein. Bei dem Temperatursensor kann es sich um ein Bauteil behandeln, das bei einer Temperaturänderung seinen Widerstand ändert. Weiterhin kann der Temperatursensor nach Art eines Halbleiter-Temperatursensors ausgebildet sein. Der Temperatursensor kann zudem ebenfalls mit der Steuerung (datenleitend) verbunden sein.

Eine Steuerung kann den Flüssigkeitsverbraucher in Abhängigkeit von der Flüssigkeitstemperatur steuern. Insbesondere kann mittels der Steuerung eine Funktion und/oder eine Komponente des Flüssigkeitsverbrauchers in Abhängigkeit der Flüssigkeitstemperatur steuerbar sein. Beispielsweise kann mittels der Steuerung eine Funktion und/oder eine Komponente der Sanitärarmatur derart steuerbar sein, dass eine (vorgegebene oder vorgebbare) maximale Mischwassertemperatur nicht überschreitbar ist. Hierzu kann die Steuerung beispielsweise mittels eines Steuerkabels und/oder einer Funkverbindung mit dem Flüssigkeitsverbraucher verbunden sein. Weiterhin kann die Steuerung in dem Flüssigkeitsverbraucher integriert sein.

Die Steuerung kann ein Mischventil des Flüssigkeitsverbrauchers steuern, sodass eine maximale Mischwassertemperatur nicht überschritten wird. Hierzu kann die Steuerung insbesondere den (elektrischen) Antrieb des Mischventils entsprechend steuern.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Sanitäreinrichtung;
- Fig. 2:: eine erste Ausführungsvariante eines Flüssigkeitsschlauchs der Sanitäreinrichtung; und
- Fig. 3:: eine zweite Ausführungsvariante des Flüssigkeitsschlauchs der Sanitäreinrichtung.

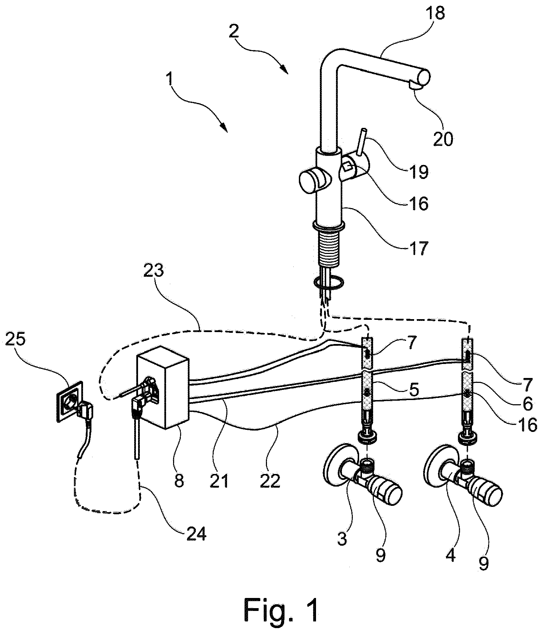

Die Fig. 1 zeigt eine Sanitäreinrichtung 1 in einer perspektivischen Darstellung. Die Sanitäreinrichtung 1 umfasst einen Flüssigkeitsverbraucher 2, der hier nach Art einer Sanitärarmatur ausgebildet ist. Der Flüssigkeitsverbraucher 2 weist ein Gehäuse 17 mit einem drehbarem Auslauf 18 auf. Das Gehäuse 17 ist an einem hier nicht gezeigten Träger, beispielsweise einer Arbeitsplatte oder einem Waschbecken, befestigbar. In dem Gehäuse 17 ist ein Mischventil 16 angeordnet, dem über einen ersten Flüssigkeitsschlauch 5 Kaltwasser und über einen zweiten Flüssigkeitsschlauch 6 Warmwasser zuführbar ist. Hierzu ist der Flüssigkeitsverbraucher 2 über den ersten Flüssigkeitsschlauch 5 mit einem ersten Flüssigkeitsanschluss 3 für das Kaltwasser und über den zweiten Flüssigkeitsschlauch 6 mit einem zweiten Flüssigkeitsanschluss 4 für das Warmwasser verbunden. Bei dem ersten Flüssigkeitsanschluss 3 und dem zweiten Flüssigkeitsanschluss 4 handelt es sich hier um Eckventile, die an einer hier nicht gezeigten Wand und/oder beispielsweise in einer Küche angeordnet sind. Das Kaltwasser und das Warmwasser sind durch das Mischventil 16 zu einem Mischwasser mit einer gewünschten Mischwassertemperatur mischbar. Zur Einstellung der Mischwassertemperatur ist das Mischventil 16 über ein Betätigungselement 19 betätigbar, das hier nach Art eines Hebels ausgeführt ist. Das Mischwasser ist anschließend über hier nicht gezeigte Flüssigkeitskanäle in dem Flüssigkeitsverbraucher 2 einer Auslauföffnung 20 des Auslaufs 18 zuführbar, über den das Mischwasser aus dem Flüssigkeitsverbraucher 2 austreten kann.

Der erste Flüssigkeitsschlauch 5 und der zweite Flüssigkeitsschlauch 6 weisen jeweils einen Dehnungssensor 7 zur Bestimmung eines Flüssigkeitsdrucks des Kaltwassers in dem ersten Flüssigkeitsschlauch 5 und des Warmwassers in dem zweiten Flüssigkeitsschlauchs 6 auf, die beide als Dehnungsmessstreifen ausgebildet sind und jeweils über zwei erste Anschlussleitungen 21 mit einer Steuerung 8 verbunden sind. Weiterhin weist der zweite Flüssigkeitsschlauch 6 einen Temperatursensor 15 zur Bestimmung einer Flüssigkeitstemperatur des Warmwassers in dem zweiten Flüssigkeitsschlauch 6 auf, der über eine zweite Anschlussleitung 22 mit der Steuerung 8 verbunden ist. Die Steuerung 8 steuert das Mischventil 16 des Flüssigkeitsverbrauchers 2 in Abhängigkeit von dem Flüssigkeitsdruck des Kaltwassers und Warmwassers derart, dass das Mischwasser die Auslauföffnung 20 mit einem vorgegebenen maximalen Mischwasserdruck verlässt. Weiterhin steuert die Steuerung 8 das Mischventil 16 des Flüssigkeitsverbrauchers 2 in Abhängigkeit von der Flüssigkeitstemperatur des Warmwassers derart, dass das Mischwasser die Auslauföffnung 20 mit einer vorgegebenen maximalen Mischwassertemperatur verlässt. Hierzu ist die Steuerung 8 über ein Steuerkabel 23 mit dem Flüssigkeitsverbraucher 2 und über eine Energieversorgungsleitung 24 mit einer Energiequelle 25 verbunden. Bei der Energiequelle 25 handelt es sich um Netzstrom. Alternativ könnte auch eine Batterie verwendet werden. Der erste Flüssigkeitsanschluss 3 und der zweite Flüssigkeitsanschluss 4 weisen jeweils eine Sicherungseinrichtung 9 auf, die hier als elektrisch betätigbare Ventile ausgebildet sind. Die Sicherungseinrichtungen 9 sind hier über eine Funkverbindung mit der Steuerung 8 verbunden, sodass die Steuerung 8 die Sicherungseinrichtungen 9 schließen kann, wenn mithilfe der Dehnungssensoren 7 ein Druckabfall des Flüssigkeitsdrucks in dem ersten Flüssigkeitsschlauch 5 und/oder dem zweiten Flüssigkeitsschlauch 6 detektiert wird, der auf eine Leckage stromabwärts des ersten Flüssigkeitsanschlusses 3 und/oder des zweiten Flüssigkeitsanschlusses 4 hindeutet.

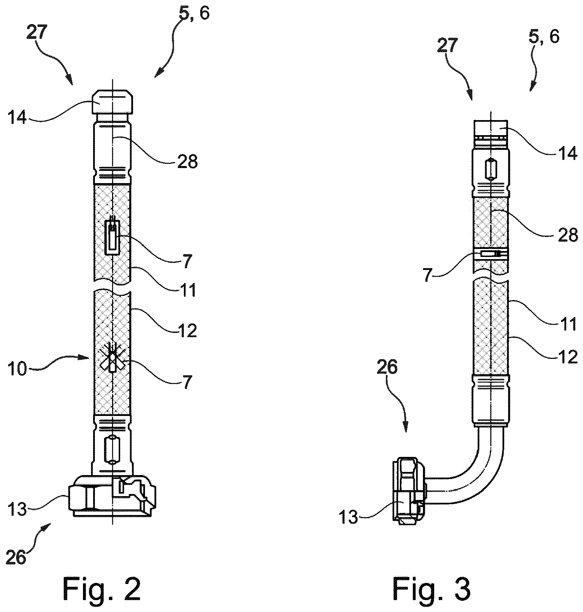

Die Fig. 2 zeigt eine erste Ausführungsvariante eines ersten Flüssigkeitsschlauchs 5 und/oder eines zweiten Flüssigkeitsschlauchs 6. Der Flüssigkeitsschlauch 5, 6 weist an einem ersten längsseitigen Ende 26 ein erstes Anschlusselement 13 nach Art einer Mutter auf, mittels der der Flüssigkeitsschlauch 5, 6 an einem der in der Fig. 1 gezeigten Flüssigkeitsanschlüsse 3, 4 befestigbar ist. Weiterhin weist der Flüssigkeitsschlauch 5, 6 an einem zweiten längsseitigen Ende 27 ein zweites Anschlusselement 14 nach Art eines Nippels auf, mittels dem der Flüssigkeitsschlauch 5, 6 in den in der Fig. 1 gezeigten Flüssigkeitsverbraucher 2 steckbar ist. An einer Oberfläche 11 einer Schlauchwand 12 des Flüssigkeitsschlauchs 5, 6 ist ein Dehnungssensor 7 angeordnet, der parallel zu einer Längsachse 28 des Flüssigkeitsschlauchs 5, 6 orientiert ist, sodass durch den Dehnungssensor 7 eine Längenänderung des Flüssigkeitsschlauchs 5, 6 bestimmbar ist. Zudem weist der Flüssigkeitsschlauch 5, 6 in einem unteren Bereich eine Mehrzahl von Dehnungssensoren 7 auf, die eine Dehnungssensor-Rosette 10 bilden.

Die Fig. 3 zeigt eine zweite Ausführungsvariante eines ersten Flüssigkeitsschlauchs 5 und/oder eines zweiten Flüssigkeitsschlauchs 6. Der Flüssigkeitsschlauch 5, 6 weist ebenfalls an einem ersten längsseitigen Ende 26 ein erstes Anschlusselement 13 nach Art einer Mutter auf, mittels der der Flüssigkeitsschlauch 5, 6 an einem der in der Fig. 1 gezeigten Flüssigkeitsanschlüsse 3, 4 befestigbar ist. Weiterhin weist der Flüssigkeitsschlauch 5, 6 an einem zweiten längsseitigen Ende 27 ein zweites Anschlusselement 14 nach Art eines Nippels auf, mittels dem der Flüssigkeitsschlauch 5, 6 in den in der Fig. 1 gezeigten Flüssigkeitsverbraucher 2 steckbar ist. An einer Oberfläche 11 einer Schlauchwand 12 des Flüssigkeitsschlauchs 5, 6 ist ein Dehnungssensor 7 angeordnet, der quer zu einer Längsachse 28 des Flüssigkeitsschlauchs 5, 6 orientiert ist, sodass durch den Dehnungssensor 7 eine Durchmesseränderung des Flüssigkeitsschlauchs 5, 6 bestimmbar ist.

Durch die vorliegende Erfindung ist ein Flüssigkeitsdruck einer einem Flüssigkeitsverbraucher einer Sanitäreinrichtung zugeführten Flüssigkeit mit geringem Aufwand überwachbar.

### Bezugszeichenliste

- 1: Sanitäreinrichtung
- 2: Flüssigkeitsverbraucher
- 3: erster Flüssigkeitsanschluss
- 4: zweiter Flüssigkeitsanschluss
- 5: erster Flüssigkeitsschlauch
- 6: zweiter Flüssigkeitsschlauch
- 7: Dehnungssensor
- 8: Steuerung
- 9: Sicherungseinrichtung
- 10: Dehnungssensor-Rosette
- 11: Oberfläche
- 12: Schlauchwand
- 13: erstes Anschlusselement
- 14: zweites Anschlusselement
- 15: Temperatursensor
- 16: Mischventil
- 17: Gehäuse
- 18: Auslauf
- 19: Betätigungselement
- 20: Auslauföffnung
- 21: erste Anschlussleitung
- 22: zweite Anschlussleitung
- 23: Steuerkabel
- 24: Energieversorgungsleitung
- 25: Energiequelle
- 26: erstes längsseitiges Ende
- 27: zweites längsseitiges Ende
- 28: Längsachse

## Patentansprüche

1. Sanitäreinrichtung (1), zumindest aufweisend:
- einen Flüssigkeitsverbraucher (2),
- zumindest einen Flüssigkeitsanschluss (3, 4) zur Bereitstellung einer Flüssigkeit und
- zumindest einen Flüssigkeitsschlauch (5, 6), der den Flüssigkeitsverbraucher (2) mit dem zumindest einen Flüssigkeitsanschluss (3, 4) verbindet, wobei der zumindest eine Flüssigkeitsschlauch (5, 6) zumindest einen Dehnungssensor (7) zur Bestimmung eines Flüssigkeitsdrucks in dem zumindest einen Flüssigkeitsschlauch (5, 6) umfasst.

2. Sanitäreinrichtung (1) nach Patentanspruch 1, wobei eine Steuerung (8) den Flüssigkeitsverbraucher (2) in Abhängigkeit von dem Flüssigkeitsdruck steuert.

3. Sanitäreinrichtung (1) nach einem der vorhergehenden Patentansprüche, wobei eine Steuerung (8) eine Sicherungseinrichtung (9) gegen Leckagen in Abhängigkeit von dem Flüssigkeitsdruck steuert.

4. Sanitäreinrichtung (1) nach einem der vorhergehenden Patentansprüche, wobei der zumindest eine Flüssigkeitsschlauch (5, 6) eine Mehrzahl von Dehnungssensoren (7) aufweist, die eine Dehnungssensor-Rosette (10) bilden.

5. Sanitäreinrichtung (1) nach einem der vorhergehenden Patentansprüche, wobei der zumindest eine Dehnungssensor (7) auf einer Oberfläche (11) des zumindest einen Flüssigkeitsschlauchs (5, 6) angeordnet ist.

6. Sanitäreinrichtung (1) nach einem der Patentansprüche 1 bis 4, wobei der zumindest eine Dehnungssensor (7) in einer Schlauchwand (12) des zumindest einen Flüssigkeitsschlauchs (5, 6) angeordnet ist.

7. Einrichtung (1) nach einem der Patentansprüche 1 bis 4, wobei der zumindest eine Dehnungssensor (7) an einem Anschlusselement (13, 14) des zumindest einen Flüssigkeitsschlauchs (5, 6) angeordnet ist.

8. Sanitäreinrichtung (1) nach einem der vorhergehenden Patentansprüche, wobei der zumindest eine Flüssigkeitsschlauch (5, 6) einen Temperatursensor (15) zur Bestimmung der Flüssigkeitstemperatur in dem zumindest einen Flüssigkeitsschlauch (5, 6) umfasst.

9. Sanitäreinrichtung (1) nach Patentanspruch 8, wobei eine Steuerung (8) den Flüssigkeitsverbraucher (2) in Abhängigkeit von der Flüssigkeitstemperatur steuert.

10. Sanitäreinrichtung (1) nach Patentanspruch 9, wobei die Steuerung (8) ein Mischventil (16) des Flüssigkeitsverbrauchers (2) steuert, sodass eine maximale Mischwassertemperatur nicht überschritten wird.
